# EUROPÄISCHE PATENTANMELDUNG

(11) **EP 1 882 969 A1**
(43) Veröffentlichungstag der Anmeldung: **30.01.2008**
(21) Anmeldenummer: 07014253.4
(22) Anmeldetag: 20.07.2007
(51) Int. Cl.: G02B 21/00

(54) **Laser-Scanning-Mikroskop**

(30) Priorität: 28.07.2006 DE 102006034908
(71) Anmelder: Carl Zeiss MicroImaging GmbH, 07745 Jena (DE)
(72) Erfinder: Wolleschensky, Ralf, 07743 Jena (DE); Bathe, Wolfgang, 07743 Jena (DE); Steinert, Jörg, 07743 Jena (DE); Huhse, Dieter, 12167 Berlin (DE)

(57) **Zusammenfassung**

Laser- Scanning Mikroskop mit einem Beleuchtungsstrahlengang zur Beleuchtung einer Probe und einem Detektionsstrahlengang zur wellenlängenabhängigen Erfassung von Probenlicht, wobei Filter zur Selektion von Detektionswellenlängen vorgesehen sind, wobei zur Wellenlängenselektion in mehrere Teilstrahlengänge mindestens ein bezüglich der Grenzwellenlänge zwischen Transmission und Reflektion räumlich veränderlicher Verlaufsfilter vorgesehen ist

## Beschreibung

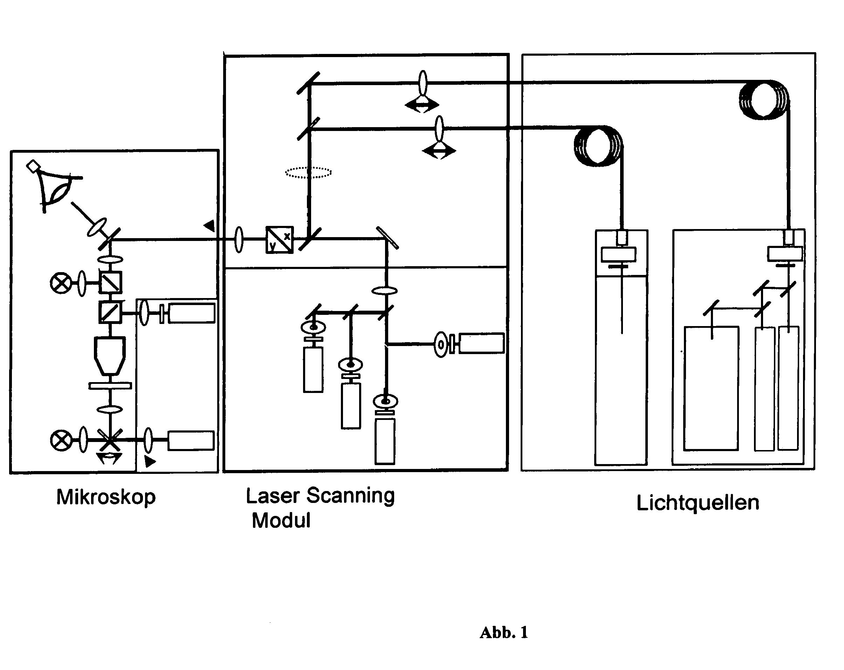

In einem Laser-Scanning-System werden Laser unterschiedlicher Leistungsklassen verwendet. Weiterhin ist ein Laser-Scanning-System durch eine grosse Anzahl von variablen Modulen gekennzeichnet, die als Detektor oder zur Beleuchtung dienen. In Abb. 1 ist schematisch ein Strahlengang eines Laser-Scanning-Mikroskopes dargestellt.
Ein LSM gliedert sich im wesentlichen wie in Abb. 1 dargestellt in 4 Module: Lichtquelle, Scanmodul, Detektionseinheit und Mikroskop. Diese Module werden im folgenden näher beschrieben. Es wird zusätzlich auf DE19702753A1 verwiesen.
Zur spezifischen Anregung der verschiedenen Farbstoffe in einem Präparat werden in einem LSM Laser mit verschiedenen Wellenlängen eingesetzt. Die Wahl der Anregungswellenlänge richtet sich nach den Absorptionseigenschaften der zu untersuchenden Farbstoffe. Der Anregungsstrahlung wird im Lichtquellenmodul erzeugt. Zum Einsatz kommen hierbei verschiedene Laser (Argon, Argon Krypton, TiSa-Laser). Weiterhin erfolgen im Lichtquellenmodul die Selektion der Wellenlängen und die Einstellung der Intensität der benötigten Anregungswellenlänge, z.B. durch den Einsatz eines akusto-optischen Kristalls. Anschließend gelangt die Laserstrahlung über eine Faser oder eine geeignete Spiegelanordnung in das Scanmodul.
Die in der Lichtquelle erzeugte Laserstrahlung wird mit Hilfe des Objektivs beugungsbegrenzt über die Scanner, die Scanoptik und die Tubuslinse in das Präparat fokussiert. Der Fokus rastert punktförmig die Probe in x-y-Richtung ab. Die Pixelverweilzeiten beim Scannen über die Probe liegen meist im Bereich von weniger als einer Mikrosekunde bis zu einigen 100 Mikrosekunden.
Bei einer konfokalen Detektion (descanned Detection) des Fluoreszenzlichtes gelangt das Licht, das aus der Fokusebene (Specimen) und aus den darüber- und darunterliegenden Ebenen emittiert wird, über die Scanner auf einen dichroitischen Strahlteiler (MD). Dieser trennt das Fluoreszenzlicht vom Anregungslicht. Anschließend wird das Fluoreszenzlicht auf eine Blende (konfokale Blende / Pinhole) fokussiert, die sich genau in einer zur Fokusebene konjugierten Ebene befindet. Dadurch werden Fluoreszenzlichtanteile außerhalb des Fokus unterdrückt.

Durch Variieren der Blendengröße kann die optische Auflösung des Mikroskops eingestellt werden. Hinter der Blende befindet sich ein weiterer dirchroitischer Blockfilter (EF) der nochmals die Anregungsstrahlung unterdrückt. Nach Passieren des Blockfilters wird das Fluoreszenzlicht mittels eines Punktdetektors (PMT) gemessen.
Bei Verwendung einer Mehrphotonen-Absorption erfolgt die Anregung der Farbstofffluoreszenz in einem kleinen Volumen an dem die Anregungsintensität besonders hoch ist. Dieser Bereich ist nur unwesentlich größer als der detektierte Bereich bei Verwendung einer konfokalen Anordnung. Der Einsatz einer konfokalen Blende kann somit entfallen und die Detektion kann direkt nach dem Objektiv erfolgen (non descannte Detektion).

In einer weiteren Anordnung zur Detektion einer durch Mehrphotonenabsorption angeregten Farbstofffluoreszenz erfolgt weiterhin eine descannte Detektion, jedoch wird diesmal die Pupille des Objektives in die Detektionseinheit abgebildet (nichtkonfokal descannte Detektion).

Von einem dreidimensional ausgeleuchteten Bild wird durch beide Detektionsanordnungen in Verbindung mit der entsprechenden Einphotonen bzw. Mehrphotonen-Absorption nur die Ebene (optischer Schnitt) wiedergegeben, die sich in der Fokusebene des Objektivs befindet. Durch die Aufzeichnung mehrerer optische Schnitte in der x-y Ebene in verschiedenen Tiefen z der Probe kann anschließend rechnergestützt ein dreidimensionales Bild der Probe generiert werden.
Das LSM ist somit zur Untersuchung von dicken Präparaten geeignet. Die Anregungswellenlängen werden durch den verwendeten Farbstoff mit seinen spezifischen Absorptionseigenschaften bestimmt. Auf die Emissionseigenschaften des Farbstoffes abgestimmte dichroitische Filter stellen sicher, dass nur das vom jeweiligen Farbstoff ausgesendete Fluoreszenzlicht vom Punktdetektor gemessen wird.

In biomedizinischen Applikationen werden zur Zeit mehrere verschiedene Zellregionen mit verschiedenen Farbstoffe gleichzeitig markiert (Multifluoreszenz). Die einzelnen Farbstoffe können mit den Stand der Technik entweder aufgrund verschiedener Absorptionseigenschaften oder Emissionseigenschaften (Spektren) getrennt nachgewiesen werden. Dazu erfolgt eine zusätzliche Aufspaltung des Fluoreszenzlichts von mehreren Farbstoffen mit den Nebenstrahlteilern (DBS) und eine getrennte Detektion der einzelnen Farbstoffemissionen in getrennten Punktdetektoren (PMT x). Das LSM LIVE der Carl Zeiss Micolmaging GmbH realisiert einen sehr schnellen Linienscanner mit einer Bilderzeugung um 120 Bildern pro Sekunde (http://www.zeiss.de/c12567be00459794/Contents-Frame/fd9fa0090eee01 a641256a550036267b).

Die Verbindung der Lichtquellenmodule mit dem Scanmodul erfolgt in der Regel über Lichtleitfasern.
Das Einkoppeln mehrerer unabhängiger Laser in eine Faser zur Übertragung zum Scankopf wurde beispielsweise in Pawley: "Handbook of Confocal Microskopy", Plenum Press, 1994, Seite 151 sowie in DE19633185 A1 beschrieben.

Bei der Laser-Scanning-Mikroskopie-Messung von Proben, die mit zwei oder mehr Fluoreszenzfarbstoffen markiert wurden, wird normalerweise das von der Probe emittierte Licht vor der eigentlichen Detektion spektral aufgeteilt. Üblicherweise derart, dass ein Teilstrahl nur noch die Wellenlängen λ < x nm und der andere Teilstrahl nur noch Wellenlängen λ > x nm enthält. Dies wird üblicherweise mittels so genannter Farbteiler (Lang- oder Kurzpassfilter bzw. dichroitische Strahlteiler) erreicht. Da der sinnvolle (oder gar der optimale) Wert von x von den verwendeten Farbstoffen abhängt, werden in den LSM Filterräder mit mehreren Farbteilern eingesetzt. Dieses ist ein komplizierter Aufbau, der entweder von vornherein sehr viele verschiedene Farbteiler enthalten muss, oder trotz des Aufwandes nur bedingt variabel ist.

### Beschreibung der Erfindung und ihrer Vorteile

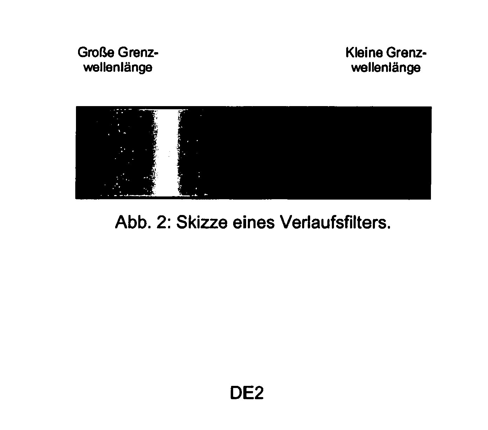

Als flexibler Nebenfarbteiler (NFT) wird ein so genannter Verlaufsfilter (z.B. Kurzpass) verwendet. Dies ist ein Filter, dessen Grenzwellenlänge der Transmission sich über die Position des Filters ändert, so dass er sich beispielsweise an einer Stelle wie ein Kurzpass mit der Grenzwellenlänge 500 nm verhält, während er an einer anderen Stelle wie ein Kurzpass mit der Grenzwellenlänge 600 nm wirkt, siehe Abb. 2. Diese zeigt schematisch einen Velaufsfilter mit kontinuierlicher Änderung der Grenzwellenlänge zwischen reflektivem und transmittivem Verhalten.

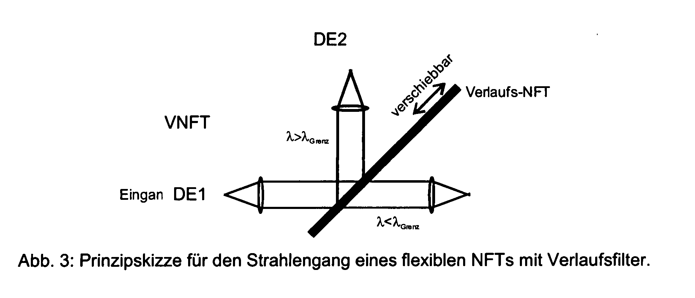

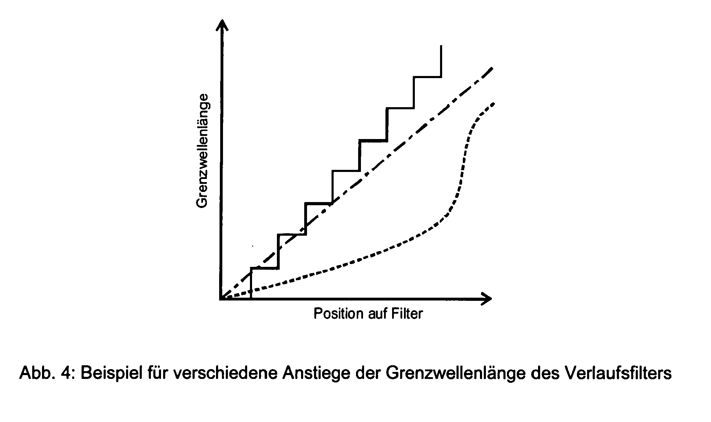

Abb. 3 zeigt eine Prinzipskizze für den Strahlengang eines flexiblen NFTs mit Verlaufsfilter.

Der kollimierte Eingangsstrahl wird an einem Verlaufsfilter VNFT in Richtung zweier Detektionsstrahlengänge DE1 und DE2 aufgespalten.

Der VNFT befindet sich in Detektionsrichtung hinter dem Hauptfarbteiler (MDB in Fig.1), vorteilhaft im Strahlengang an der üblichen Stelle für einen Nebenfarbteiler.

Der Verlaufsfilter VNFT ist in einem Winkel, meist 45 Grad, zur optischen Achse der einfallenden Strahlung im Detektionsstrahlengang angeordnet und entlang dieser Winkelstellung im Strahlengang verschiebbar, um seine optisch wirksame Grenzwellenlänge zwischen Transmission (in Richtung DE1) und Reflektion (in Richtung DE2) zu verändern.

Je nachdem, an welcher Stelle also ein solcher Filter beleuchtet wird, ändert sich die Durchlasscharakteristik dieses Filters. Ein flexibler NFT kann also leicht dadurch realisiert werden, dass ein solcher Verlaufsfilter in einem ansonsten festen Strahlengang verschiebbar angeordnet ist. Ein entsprechender Aufbau ist in Abb. 2 skizziert.

Vorteilhaft wird also das Licht nicht räumlich spektral aufgespalten, um dann einzelne (räumlich getrennt angeordnete) Spektralanteile in verschiedene Richtungen zu spiegeln und statt mehrerer Filter mit fester Grenzwellenlänge wird ein Verlaufsfilter verwendet.
Hierbei sollte über den Querschnitt des Eingangslichtstrahls die Variation der Grenzwellenlänge des Filters kleiner die sein als die gewünschte spektrale Auflösung.
- Folgende vorteilhafte Modifikationen der Erfindung sind Gegenstand der vorliegenden Offenbarung:
   Es ist egal, ob es sich um einen Kurzpass- oder Langpass-Verlaufsfilter handelt. Einmal gehen die kürzeren Wellenlängen auf Detektor 1 und die längeren auf Detektor 2, im anderen Fall ist es umgekehrt.
- Ein Teil des Filters kann auch als Glasplatte ganz ohne Filtereigenschaften (Licht passiert den NFT ungehindert, keinerlei Ablenkung des Lichtes auf den zweiten Zweig) oder als Spiegel (vollständige Ablenkung des Lichtes in den zweiten Zweig) ausgebildet werden.
- Der Filter kann linear (verschiebbar) oder z.B. als Rad (Scheibe, drehbar) ausgelegt sein.
- Der Filter könnte in Stufen mit einer Anzahl verschiedener Filter beschichtet sein, statt kontinuierlich, oder aber Teile des Filters in Stufen und andere kontinuierlich.
- Auch Bandpässe anstelle der Kurzpass- oder Langpasscharakteristik sind denkbar.
- Die Variation der Wellenlänge kann der gewünschten spektralen Auflösung angepasst sein und muss nicht unbedingt linear sein, in Abb.3 sind diskrete Sprünge der Grenzwellenlänge dargestellt.

## Patentansprüche

1. Laser- Scanning Mikroskop mit einem Beleuchtungsstrahlengang zur Beleuchtung einer Probe und einem Detektionsstrahlengang zur wellenlängenabhängigen Erfassung von Probenlicht, wobei Filter zur Selektion von Detektionswellenlängen vorgesehen sind, **dadurch gekennzeichnet, dass** zur Wellenlängenselektion in mehrere Teilstrahlengänge mindestens ein bezüglich der Grenzwellenlänge zwischen Transmission und Reflektion räumlich veränderlicher Verlaufsfilter vorgesehen ist

2. Laser- Scanning Mikroskop nach Anspruch 1,
wobei der Verlaufsfilter zur Veränderung der optisch wirksamen Grenzwellenlänge im Detektionsstrahlengang verschieblich ausgebildet ist.

3. Laser- Scanning Mikroskop nach Anspruch 1 oder 2,
wobei in mindestens einem Teilstrahlengang ein weiterer Verlaufsfilter angeordnet ist.

4. Laser- Scanning Mikroskop nach Anspruch 1,2 oder 3,
wobei die Verschiebung des Verlaufsfilters motorisch über eine zentrale Ansteuereinheit erfolgt.

5. Laser- Scanning Mikroskop nach einem der Ansprüche 1-4,
wobei eine Kaskadierung und gemeinsame Ansteuerung zur flexiblen Zuordnung von Wellenlängen zu Detektionskanälen erfolgt.

6. Strahlteiler zum Einsatz im Detektionsstrahlengang einer Laser- Scanning-Mikroskopes,
zur wellenlängenabhängigen Aufspaltung in einen transmittierten und einen refektierten Anteil
bestehend aus einem im Strahlengang verschieblichen Verlaufsfilter zur einstellbaren Aufspaltung.

7. Strahlteiler nach Anspruch 6, wobei der Verlaufsfilter eine zumindest teilweise kontinuierliche örtliche Veränderung der Grenzwellenlänge zwischen reflektiertem und transmittiertem Anteil des Detektionslichtes aufweist.

8. Strahlteiler nach Anspruch 6 oder 7, wobei der Verlaufsfilter eine zumindest teilweise stufenweise örtliche Veränderung der Grenzwellenlänge zwischen reflektiertem und transmittiertem Anteil des Detektionslichtes aufweist.

9. Strahlteiler nach Anspruch 6, 7 oder 8, wobei der Verlaufsfilter als Kurzpass, Langpass oder Bandpass ausgeführt ist.
